(19) Europäisches Patentamt

European Patent Office

Office européen des brevets

(11) **EP 0 610 848 B1**

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int. Cl.$^6$: **C04B 35/58**

(21) Anmeldenummer: **94101801.2**

(22) Anmeldetag: **07.02.1994**

(54) **Verfahren zur Herstellung von dichtgesinterten keramischen Bauteilen aus Siliziumnitrid mit hoher mechanischer Festigkeit**

Method of making dense sintered ceramic parts of silicon nitride having high mechanical strength

Procédé de fabrication de pièces ceramiques frittées dense en nitrure de silicium ayant une résistance mécanique élévée

(84) Benannte Vertragsstaaten:
**AT BE DE ES FR GB IT NL SE**

(30) Priorität: **11.02.1993 DE 4304033**

(43) Veröffentlichungstag der Anmeldung:
**17.08.1994 Patentblatt 1994/33**

(73) Patentinhaber: **HOECHST AKTIENGESELLSCHAFT**
**65929 Frankfurt am Main (DE)**

(72) Erfinder:
• **Riedel, Günter, Dr.**
  **D-65779 Kelkheim (DE)**
• **Krüner, Hartmut, Dr.**
  **D-65817 Eppstein (DE)**
• **Boberski, Cornelia, Dr.**
  **D-65835 Liederbach (DE)**
• **Hessel, Friedrich, Dr.**
  **D-55124 Mainz (DE)**
• **Böcker, Wolfgang, Dr.**
  **D-65817 Eppstein (DE)**

• **Heinrich, Jürgen, Dr.**
  **D-95100 Selb (DE)**
• **Steiner, Matthias**
  **D-95100 Selb (DE)**
• **Dötsch, Petra**
  **D-95100 Selb (DE)**
• **Rosenfelder, Ottmar, Dr.**
  **D-95100 Selb (DE)**

(56) Entgegenhaltungen:
**EP-A- 0 336 377          EP-A- 0 419 757**
**DE-A- 4 126 510**

• **CHEMICAL ABSTRACTS, vol. 100, no. 20, 14. Mai 1984, Columbus, Ohio, US; abstract no. 160968, 'Silicon nitride sinters with high density and strength' & JP-A-59 018 165 (NGK SPARK PLUG CO., LTD.) 30. Januar 1984**
• **CHEMICAL ABSTRACTS, vol. 100, no. 20, 14. Mai 1984, Columbus, Ohio, US; abstract no. 160968, 'Silicon nitride sinters with high density and strength& JP-A-59018165**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung einer homogenen und feinkristallinen Siliziumnitridkeramik, bei dem keramisches Pulver gemahlen, mit Formgebungshilfsmitteln gemischt, die Mischung zu Formteilen geformt und die Formteile anschließend unter Stickstoffatmosphäre gesintert werden. Die Erfindung betrifft auch nach dem Verfahren hergestellte Formteile.

Aus der DE-A-42 34 794 ist bereits bekannt, daß zur Herstellung von Bauteilen aus Siliziumnitrid, die aufgrund ihrer hohen Festigkeit ganz besonderen mechanischen Belastungen gewachsen sind, viele verschiedene Verfahrensparameter optimal aufeinander abgestimmt werden müssen. Insbesondere müssen während des Sinterschrittes die jeweils eingestellte Temperatur und der jeweils eingestellte Stickstoffüberdruck in Abhängigkeit von der sich langsam erhöhenden Dichte des Formteils eingestellt werden.

Die EP-A-079 678 beschreibt bereits ein Verfahren zum Sintern von Siliziumnitridkeramik mit Sinteradditiven in Form von Oxiden der Elemente Mg, Al, Y, Ce oder Be und/oder Nitriden oder Karbiden von Elementen der Gruppen IVa, Va und VIa des PSE. Das beschriebene Sinterverfahren zeichnet sich durch eine kontinuierlich Temperatursteigerung und eine dreistufige Druckführung aus. Da aber im Rahmen dieser Vorschrift eine kombinierte Haltezeit für Druck und Temperatur nicht vorgesehen ist, erreichen die danach hergestellten Bauteile nur eine mittleres Festigkeitsniveau.

EP-A-0 336 377 ehrt Sinterkörper aus Siliciumnitrid mit einem sehr feinkörnigen Gefüge mit hohen Biegefestigkeiten und einer mittelhohen Bruchzähigkeit $K_{Ic}$.

Aufgabe der vorliegenden Erfindung war es, die einzelnen Prozeßschritte der keramischen Herstellungstechnologie von Formteilen aus Siliziumnitrid so zu gestalten und die technologischen Parameter des Gesamtprozesses so zu definieren, daß bei den auf diese Weise hergestellten Bauteilen eine homogene Verteilung der Sinteradditive sowie ein feinkristallines Gefüge verwirklicht sowie Anzahl und Größe der bruchauslösenden Strukturdefekte soweit reduziert werden, damit ein Festigkeitsniveau $\geq$ 900 MPa, bei Verwendung von besonders eingestellten Rohpulvermischungen insbesondere $\geq$ 1200 MPa, reproduzierbar erreicht wird.

Die Aufgabe wird gelöst durch ein Verfahren der eingangs genannten Gattung, dessen Kennzeichenmerkmale darin zu sehen sind, daß das Sintern in einem Mehrstufenprozess bei Temperaturen im Bereich von 1700 bis 1900 °C in Stickstoffatmosphäre unter Anwendung von Gasdrucken im Bereich von 0,2 bis 50 MPa erfolgt, wobei in einer ersten Temperaturstufe eine Temperatur von 0,9 bis 0,96 · $T_{max}$, vorzugsweise 0,945 · $T_{max}$, über eine Zeitdauer von 10 bis 50 min, vorzugsweise 12 bis 25 min, bei einem $N_2$-Druck von 0,2 bis 1,2 MPa, vorzugsweise von 0,3 bis 0,6 MPa, eingehalten wird und wobei in einer zweiten Temperaturstufe eine Temperatur von 0,97 bis 0,985 · $T_{max}$, vorzugsweise von 0,975 · $T_{max}$, über eine Zeitdauer von 20 bis 80 min, vorzugsweise von 30 bis 50 min, bei einem $N_2$-Druck von 3 bis 6 MPa, vorzugsweise von 4 bis 5 MPa, eingehalten wird, und daß danach die Temperaturerhöhung auf $T_{max}$ und die Druckerhöhung auf 7 bis 50 MPa, vorzugsweise auf 7 bis 10 MPa, erfolgt.

Die Druckhaltezeit auf der Endstufe beträgt 30 bis 100 min, vorzugsweise 60 bis 90 min. Die Aufheizgeschwindigkeiten liegen im Bereich von 5 bis 35 K/min und die Druckerhöhung erfolgt mit einer Geschwindigkeit von 0,25 bis 1,2 MPa/min, vorzugsweise von 0,5 bis 1,1 MPa/min. Das Aufheizen bis zu Temperaturen im Bereich von 800 bis 1200 °C erfolgt unter Vakuum und danach bis zur ersten Temperaturstufe unter einem $N_2$-Druck von 0,3 bis 0,6 MPa.

Ein mehrstufiger Sinterzyklus mit unterschiedlichen $N_2$-Drücken wird auch in der bereits eingangs erwähnten DE-A-42 34 794 beschrieben. Die jeweilige Höhe des maximalen Gasdruckes wird nach der Lehre dieser Schrift in Abhängigkeit von der erreichten Verdichtung der Formkörper, abgeleitet vom Schwindungsverlauf der Dilatometerkurven, so eingestellt, daß der Gasdruck 0,1 bis 0,3 · $P_{max}$ bei Erreichen von 85 % der theoretischen Dichte und 0,2 bis 0,4 · $P_{max}$ bei Erreichen von 93 % der theoretischen Dichte beträgt, wobei $P_{max}$ im Bereich von 5 bis 10 MPa liegen soll.

Demgegenüber liegt nach der vorliegenden Erfindung der Druck jedoch bei einer erreichten Dichte von 90 % nur im Bereich von 0,03 bis 0,086 · $P_{max}$. Eine Verdichtung von 85 % wird erfindungsgemäß demzufolge unterhalb von 0,1 · $P_{max}$ erreicht. Gemäß der vorliegenden Erfindung liegt eine Verdichtung von 93 % der theoretischen Dichte nach Einstellung der zweiten Temperaturstufe und Druckerhöhung auf 0,42 bis 0,86 $P_{max}$ vor. Die Verknüpfung der Parameter Temperatur, Stickstoffdruck und Zeit erfolgt erfindungsgemäß vorzugsweise so, daß bei Verweilzeiten oberhalb 1700 °C im Bereich von 75 bis 135 min hochdichte, homogene und feinkristalline $Si_3N_4$-Formteile hergestellt werden können.

Unter dem Begriff Stickstoffatmosphäre ist im Rahmen der vorliegenden Erfindung reiner Stickstoff oder eine Atmosphäre zu verstehen, die im wesentlichen aus Stickstoff besteht und bei der als weitere Bestandteile nichtoxidierende Gase wie Edelgase oder Wasserstoff vorhanden sein können. Die vorgeschriebenen Druckangaben verstehen sich jeweils als Gesamtdruck und nicht als Partialdruck.

Im Rahmen der vorliegenden Erfindung hat es sich ferner als besonders vorteilhaft herausgestellt, daß $Si_3N_4$-Ausgangspulver mit hoher Reinheit und guter Sinterreaktivität eingesetzt werden, wobei auch Sinteradditive in Form von $Al_2O_3$ und mindestens eines weiteren Oxides der Gruppe IV b des Periodensystems zugesetzt werden. Die Mischung wird in wäßriger Suspension dispergiert, gemischt und gemahlen beziehungsweise deagglomeriert. Vorzugsweise erfolgt das Vordispergieren unter intensivem Rühren und der Misch-Mahlvorgang in Mahlaggregaten, um die Beseitigung von Agglomeraten $\geq 2\mu m$ zu ermöglichen und eine homogene Mischung der Einzelkomponenten zu erreichen. Entgegen der allgemeinen Vorstellung, daß eine möglichst hohe Zerkleinerungsintensität zu homogenen Sinterkörpern mit hoher Festigkeit führt, konnte gezeigt werden, daß durch die Kombination einer pH-Wert-Kontrolle während des gesamten Aufbereitungsprozesses mit der Zugabe von organischen Dispergiermitteln zur gezielten Einstellung negativer Zetapotentiale der anorganischen Feststoffpartikel und der Begrenzung der eingebrachten Zerkleinerungsenergie während der Aufbereitung unter Anwendung der erfindungsgemäßen Sinterbedingungen die aufgabengemäß angestrebten Bauteileigenschaften erreicht werden können.

Durch den schonenden Mahlvorgang wird gewährleistet, daß die Sauerstoffaufnahme während der Aufbereitung im wäßrigen Medium kleiner als 0,75 %, vorzugsweise $\leq$ 0,5 %, bleibt. Der Kornanteil $\geq$ 1μm des gemahlenen Produktes beträgt dabei < 8 % vorzugsweise $\leq$ 3 %, wobei die Korngröße zweckmäßigerweise mittels Laserbeugungsspektometrie bestimmt wird. Durch die Kombination elektrostatischer und mechanischer Deagglomerationsmechanismen gelingt es, eine hinsichtlich ihrer Homogenität verbesserte Verteilung der Sinteradditive in der wäßrigen Suspension und nachfolgend in den geformten und gesinterten Formteilen zu erreichen.

Als Dispergiermittel kann zum Beispiel ein Polymerisat aus $\alpha,\beta$-ethylenisch ungesättigten Carbonsäuren, bevorzugt deren Salzen, oder es können wasserlösliche Copolymere mit Estern der ethylenisch ungesättigten Carbonsäuren verwendet werden.

Wird als Formgebungsverfahren die Trockenpreßtechnik angewandt, so wird zunächst ein möglichst gut riesel- und preßfähiges Sprüh- oder Wirbelschichtgranulat hergestellt. Dabei kommt der Auswahl der erforderlichen organischen Formgebungshilfsstoffe, darunter sind Binder, Weichmacher und Gleitmittel zu verstehen, im Hinblick auf optimal erreichbare Festigkeitswerte der fertiggesinterten Formteile besondere Bedeutung zu.

Die Formgebungshilfsstoffe sollen zur Vermeidung von Flockungs- und Reagglomerationsprozessen kompatibel mit den verwendeten Dispergatoren sein und deren Wirkung im Hinblick auf die Deagglomeration der anorganischen Feststoffpartikel durch einen zusätzlichen elektrostatischen und/oder sterischen Effekt unterstützen. Außerdem sollen die Suspensionen unter Anwendung geeigneter Trocknungsbedingungen zu gut rieselfähigen, preßfähigen und möglichst weichen Granulaten verarbeitet werden. Die Entstehung harter Agglomerate, die im fertigen Sinterkörper zu Defekten, darunter sind unter anderem sogenannte Ring- oder Sichelporen zu verstehen, beziehungsweise zu Bereichen mit unterschiedlicher Verdichtung führen, ist unbedingt zu vermeiden.

Dies gelingt im allgemeinen mit bekannten geeigneten Kombinationen von organischen Polymeren, die als Binder z.B. Polyvinylalkohole, Polyoxazoline, Cellulosederivate, Alginate, Polysaccharide oder Monocarbonsäureesther in Kombination mit Weichmachern, z.B. Glycerol oder Polyethylenglycol, und/oder Gleitmitteln, wie Olein, Ölsäure, Stearinsäure, Stearate, Wachse oder Wachsdispersionen enthalten, sowie mit jeweils angepaßten Trocknungs- und Granulierbedingungen.

Oft wird der Standpunkt vertreten, daß die Erzielung einer hohen Dichte der ungebrannten Formteile eine unabdingbare Voraussetzung zum Erreichen hoher mechanischer Formteilfestigkeiten der fertig gebrannten Formteile ist. Überraschend wurde jedoch gefunden, daß dies im direkten Vergleich von speziellen organischen Additiven unter Anwendung spezieller Drucksinterbedingungen nicht immer zutrifft. So gelang es zum Beispiel bei Verwendung eines Binders in Form von wasserdispergierbarem Polyesterurethan in Kombination mit Polyoxazolin und/oder einem Fettsäure-Polyethylenglycolgemisch bei Rohteildichten von 56,5 % der theoretischen Dichte ein gleiches Festigkeitsniveau der gesinterten Formteile bei niedrigeren Preßdrücken zu erreichen wie mit bekannten Bindern enthaltend Polyvinylalkohol und Gycerol als Weichmacher, die zu Rohlingsdichten von 61,5 % der theoretischen Dichte führten. Die Herstellung dieser Formteile kann erfindungemäß sowohl mit dem axialen als auch, insbesondere bei rotationssymmetrischen Teilen mit großen Verhältnissen der Länge zur Dicke, mit dem isostatischen Pressen so erfolgen, daß festigkeitsbegrenzende Strukturdefekte bezüglich Anzahl und Größe minimiert beziehungsweise ganz unterbunden werden.

In der EP-A-388 214 wird die Verwendung von Polyoxazolinen als Binder für in organischen Lösemitteln dispergierte anorganische Feststoffe beschrieben, mit dem Ziel, Formkörper mit hoher Rohteildichte und -festigkeit herzustellen, wohingegen sich die vorliegende Erfindung auf wässrig dispergierte Systeme bezieht. Überraschend ist außerdem die vorteilhafte Verwendung der Polyoxazoline in Kombination mit Polyesterurethanen und/oder Fettsäure-Polyethylenglycol-Dispersionen sowie deren Auswirkung auf die mechanische Festigkeit gesinterter Formkörper durch Vermeidung von Strukturdefekten.

Der direkte Nachweis der erfindungsgemäß beanspruchten Wirkung zur Vermeidung festigkeitsbegrenzender Strukturdefekte ist letztlich nur im Zusammenhang zwischen erreichter Biegebruchfestigkeit, beziehungsweise Bruchspannung, sowie Größe und Position des bruchauslösenden Fehlers zu führen. Typische Formgebungsdefekte wie Granulatrelikte liegen in der Größenordnung von 20 bis 80 μm (je nach Granulatkorngröße). Sind diese bei der 4-Punktbiegeprüfung im Bereich maximaler Zugspannungen angeordnet, so würden sie die Festigkeit dieser Werkstoffe auf 1000 bzw. 500 MPa begrenzen. Dies resultiert aus der bekannten Beziehung:

$$\sigma_B = \frac{K_{IC}}{F \cdot \sqrt{\pi \cdot a_c}}$$

mit

- $\sigma_B$        = Bruchspannung (Festigkeit)
- $K_{IC}$        = kritischer Spannungsintensitätsfaktor
- F        = Formfaktor ($\approx$ 1,13)
- $a_c$        = kritische Fehlergröße

Diese Fehlerarten könnten auch an polierten Anschliffen der gesinterten Formteile lichtmikroskopisch mit 100-facher Vergrößerung nachgewiesen werden und sind an erfindungsgemäß aufbereiteten, gepreßten und dicht gesinterten Formteilen nicht zu erkennen.

Andere Formgebungsverfahren, die nicht von zwischengetrockneten Produkten (z.B. Granulaten) ausgehen, sind als unkritisch hinsichtlich der obengenannten Strukturdefekte einzuschätzen, beinhalten allerdings bei nicht sachgemäßer Durchführung ebenfalls mögliche andere Störfaktoren.

Beim Schlickerguß kann der erfindungsgemäß aufbereitete Schlicker durch Einstellung des Feststoffgehaltes auf 40 bis 60 Vol.-% und einem Polymerzusatz in Form von z.B. Wachsen oder Cellulosederivaten direkt in Gipsformen oder mittels Druckschlickerguß in Kunststofformen gegossen und entwässert werden. Es ist aber auch möglich, den aufbereiteten und mit dem Dispergiermittel versehenen Schlicker ohne weitere Polymerzusätze z.B. im Sprühtrockner zu entwässern und das für die Gießformgebung benötigte Material zu redispergieren.

Dies gilt gleichermaßen für die Herstellung einer Spritzgußmasse. Die aufbereitete und getrocknete Masse wird mit Polymerzusätzen beziehungsweise deren Kombination mit Wachsen, Paraffinen, Phthalaten, Stearin- und/oder Ölsäuren, Polyoxymethylen u.ä. in Knetmischern oder Extrudern intensiv vermischt und nachfolgend unter Anwendung von Spritzdrucken im Bereich von 5 bis 2000 bar geformt.

In Abhängigkeit von Art und Menge der als Formgebungshilfsmittel verwendeten Polymerzusätze erfolgt vor der Sinterung das Ausheizen dieser Zusätze mit unterschiedlich langen Zykluszeiten in oxidierender oder inerter Atmosphäre mit einer Maximaltemperatur von 1000 °C, vorzugsweise von 500 °C, gegebenenfalls unter Verwendung von Pulverschüttungen wie z.B. Aluminiumoxid als Einbettmittel zur Verkürzung der Zykluszeiten.

Zur Vermeidung von Konzentrationsgradienten und/oder Porenneubildung durch Entstehung und Verdampfung flüchtiger Bestandteile in Form von Si oder $SiO_x$ soll der Volumenanteil von zu sinternden $Si_3N_4$-Formkörpern, bezogen auf das Gesamtvolumen des Tiegels, der das Sintergut enthält, möglichst hoch sein. Als Tiegelmaterial kann Bornitrid, mit Bornitrid beschichteter Graphit oder Siliziumnitrid verwendet werden.

Zur Erhöhung des Volumenanteils an $Si_3N_4$ können die Formkörper auch in ein Schüttgut aus $Si_3N_4$ mit Teilchengrößen von 0,3 bis 5 mm, das vorzugsweise mehr als 20 % der im Formteil vorhandenen Sinteradditive enthält, eingebettet werden. Erfindungsgemäß können als Brennhilfsmittel auch bereits entsprechend geformte und gesinterte Teile aus $Si_3N_4$ mit oder ohne Sinteradditive Anwendung finden, bei zylindrischen Formteilen insbesondere auch in Form von Hülsen.

Die nach dem erfindungsgemäßen Verfahren hergestellten Formteile besitzen eine sehr feinkörnige Mikrostruktur mit einer mittleren Kornbreite $\leq$ 0,6 $\mu$m wobei die Kornanzahl pro Flächeneinheit $\geq$ 0,95 $\cdot$ $10^6$ beträgt. Gegenüber der vorherrschenden Meinung, daß für hohe Festigkeiten mittlere Streckungsgrade von mehr als 8 vorteilhaft sind, konnte erfindungsgemäß gezeigt werden, daß mittlere Streckungsgrade von nur 5 bis 7,8 zu den erfindungsgemäß angestrebten hohen mechanischen Festigkeiten führen.

Ein weiteres Gefügemerkmal der nach dem erfindungsgemäßen Verfahren hergestellten Formteile ist eine enge Kristallitbreitenverteilung, wobei 95 % der Kristallite im Bereich von 0,05 $\mu$m bis 0,5 $\mu$m liegen und die mechanische Biegefestigkeit bei Raumtemperatur $\geq$ 1180 MPa beträgt. Die Bestimmung der Gefügemerkmale erfolgt an polierten und plasmageätzten Anschliffen der gesinterten Formteile mikroskopisch mit 5000-facher Vergrößerung.

Die aus den oxidischen Sinteradditiven und dem $SiO_2$ an der Randzone der $Si_3N_4$-Partikel gebildete amorphe Korngrenzenphase liegt in den fertig gesinterten Formteilen durch das erfindungsgemäße Herstellungsverfahren sehr fein verteilt vor. Das zeigt sich dadurch, daß die lokale Ausdehnung der amorphen Korngrenzenphase in den Tripelpunkten durchschnittlich 0,2 $\mu$m beträgt.

Die Kombination der erfindungsgemäßen Verfahrensmerkmale und die damit erreichte Reduzierung festigkeitsbegrenzender Strukturdefekte ermöglicht auf Basis eines Anteils von 8 bis 12 Gew.-% an Sinteradditiven die Herstellung von Formteilen mit Biegebruchfestigkeiten $\geq$ 1200 MPa. Spitzenwerte können sogar oberhalb 1300 MPa liegen (Vierpunktbiegeprüfung nach DIN 51110; Zugseite der Prüfkörper poliert).

Überraschend hat sich herausgestellt, daß durch den erfindungsgemäßen Temperatur-Zeit-Druck-Zyklus beim Sintern ein Teil des in den Masseansatz eingebrachten $Al_2O_3$ (30 bis 70 % der Gesamtmenge, nachgewiesen durch STEM) in den $Si_3N_4$-Kristalliten gelöst wird. Dieser Umstand trägt beträchtlich zur Verbesserung der mechanischen Eigenschaften der fertig gesinterten Formteile bei erhöhten Temperaturen bei.

Die $K_{IC}$-Werte der Formteile liegen im Bereich 7,5 bis 11 MPa $\cdot$ $\sqrt{m}$ (Prüfung nach DIN 51109). Wegen der hohen Wärmeleitfähigkeit von 20 W/m $\cdot$ K und des sehr niedrigen linearen thermischen Ausdehnungskoeffizienten von 2,4 $\cdot$ $10^{-6}$/K (gemessen im Bereich von 20 bis 1000 °C) besitzen die nach dem erfindungsgemäßen Verfahren hergestellten Formteile auch eine sehr gute Thermoschockbeständigkeit. Ihr E-Modul beträgt 310 GPa, während ihre mechanische Biegebruchfestigkeit bei Prüftemperaturen von 1000 °C im Bereich von 850 bis 1000 MPa liegt.

Die mit dem erfindungsgemäßen Verfahren hergestellten Formteile eignen sich besonders zur Verwendung im Maschinen-, Anlagen- und Motorenbau sowie speziell als Ein- und Auslaßventil in Verbrennungsmotoren.

Die Erfindung wird durch die nachfolgend aufgeführten Ausführungsbeispiele näher erläutert, wobei aber daraus eine Beschränkung auf die konkret dargestellten Ausführungsformen nicht abgeleitet werden soll.

Beispiel 1

Die in Tabelle 1 genannten oxidischen Bestandteile der Pulvermischung wurden in einer Menge von 610,5 Gew.-Teilen in einer vorgelegten Wassermenge von 3,25 Vol.-Teilen worin 0,5 % Polycarbonsäure (Hersteller BK Ladenburg GmbH) als Dispergiermittel (mit 25 % Wirkstoffanteil) enthalten ist, 20 min lang mittels Rührwerk (Dissolver) vordispergiert. Danach erfolgte die kontinuierliche Zugabe von 5265 Gew.-Teilen $Si_3N_4$-Pulver Typ B mittels einer Dosierschnecke über einen Zeitraum von 10 min. Nach einer weiteren Dispergierzeit von 30 min wurde der vordispergierte Schlicker in eine Rührwerkskugelmühle mit 4 Vol.-Teilen Rauminhalt gepumpt. Die Mühle besaß eine Auskleidung und Mahlscheiben aus $Si_3N_4$. Der Mahlraum war mit $Si_3N_4$-Mahlkugeln der Größe 1 bis 2 mm gefüllt. Unter Nutzung eines Behälters mit Rührwerk erfolgte eine Umlaufmahlung mit einer effektiven Mahldauer von 75 min.

Nach Beendigung der Mahlung wurden dem Schlicker, bezogen auf den darin enthaltenen Feststoff, 0,5 Gew.- % Polyvinylalkohol (®Mowiol GE 4-86, Hersteller Hoechst AG, Frankfurt/M.) und 1 % Glycerol zugesetzt. Weitere Parameter der Aufbereitung und zugehörige Meßwerte enthält Tabelle 1. Danach erfolgte die Sprühtrocknung mittels Zweistoffdüse unter folgenden Bedingungen:

Lufteintrittstemperatur:    200 °C
Luftaustrittstemperatur:    90 °C
Schlickerdurchsatz:    3,3kg/h
Luftmenge (Düse):    2,9 kg/h

Das auf diese Weise hergestellte Granulat besitzt folgende Eigenschaften

| | | |
|---|---|---|
| Schüttdichte: | | 0,97 g/cm$^3$ |
| Auslaufzeit aus einer 7-mm-Düse: | | 4,5 s/100g |
| Restfeuchte: | | 0,8 % |
| Granulatgröße: | $d_{10}$: | 29µm |
| | $d_{50}$: | 64µm |
| | $d_{90}$: | 105µm |
| Feinanteil < 24µm: | | 6 %. |

Das Granulat wurde dann mit dem isostatischen Preßverfahren bei einem Preßdruck von 2000 bar zu Zylinderkörpern mit 13 mm Durchmesser und 120 mm Länge geformt.

Nach Ausheizen der organischen Preßhilfsmittel erfolgte die Sinterung unter folgenden Bedingungen:

$T_{max}$ = 1865 °C;

erste Temperaturstufe:    $0,945 \cdot T_{max}$ über eine Zeitdauer von 17 min, bei einem $N_2$-Druck von 0,4 MPa;
zweite Temperaturstufe:    $0,975 \cdot T_{max}$ über eine Zeitdauer von 40 min bei einem $N_2$-Druck von 4,5 MPa;

Temperaturerhöhung auf $T_{max}$ und Druckerhöhung auf 10 MPa über eine Druckhaltezeit von 15 min.

Die auf diese Weise erzielten Formteileigenschaften sind in Tabelle 2 im einzelnen angegeben.

Beispiel 2:

Die Ausgangspulver wurden gemäß Beispiel 1 gemischt, gemahlen und nach Abschluß der Mahlung ohne weiteren Polymerzusatz unter sonst gleichen Bedingungen wie im Beispiel 1 sprühgetrocknet.

Danach erfolgte die Redispergierung des oben genannten Pulvers mit einem Feststoffgehalt von 65 Gew.-%. Bezogen auf die Pulvereinwaage, wurde dann ein Zusatz von 0,5 % eines Dispergators vom Typ KV 5088, Hersteller Zschimmer & Schwarz GmbH, Lahnstein, und 3 % KST-Wachs (Hoechst AG) zugesetzt. Der Schlicker wurde über einen Zeitraum von 2 h unter Rühren homogenisiert und dann in konventionelle Gipsformen zu Stäben vergossen. Nach einer Zeit von 1 h wurden die Grünteile entformt, über einen Zeitraum von 24 h bei einer Temperatur von 30 °C getrocknet und wie in Beispiel 1 gesintert.

Beispiel 3:

Die Pulveraufbereitung und -trocknung erfolgte wie im Beispiel 2. Danach wurde das Material mit organischen Komponenten in einem Knetmischer über eine Zeit von 2 h bei einer Temperatur von 190 °C intensiv vermischt. Die Organik setzt sich wie folgt zusammen:

74,3 % Polyoxymethylen 52021 (Hersteller Hoechst AG)
19,2 % Polyethylenglycol (Hoechst AG)
6,4 % Mikrowachs C (Hersteller Hoechst AG)

Das durch Abkühlen im Kneter granulierte Material wurde sodann in einer Spritzgußmaschine bei 185 °C Düsentemperatur mit einem Einspritzdruck von 135 MPa zu Stäben gespritzt. Die Grünteile wurden in einem Ausheizofen über eine Zeit von 48 h auf 400 °C aufgeheizt und so die organischen Bestandteile vollständig entfernt. Die Sinterung erfolgt gemäß Beispiel 1; die resultierenden Formteileigenschaften enthält Tabelle 2.

Beispiel 4:

$Si_3N_4$-Pulver Typ A wird gemäß Beispiel 1 und den in Tabelle 1 für Pulver A genannten Bedingungen mit Sinteradditiven vermischt, gemahlen und sprühgetrocknet.
Prismatische Formteile mit den Abmessungen 20 x 20 x 55 mm wurden mit dem isostatischen Naßmatrizenverfahren bei 2500 bar gepreßt und unter den wie folgt geänderten Bedingungen gegenüber Beispiel 1 gesintert:
Die Haltezeit bei allen 3 Temperaturstufen betrug 40 min. Der Druckaufbau erfolgte auf 1,2 MPa bei Erreichen der ersten Temperaturstufe und auf 5 MPa, nachdem 1/4 der Haltezeit der zweiten Temperaturstufe gesintert waren. Danach wurde der Druck auf 8 MPa erhöht und bis zum Ende der Temperaturhaltezeit konstant gehalten. Die daraus resultierenden Formteileigenschaften enthält Tabelle 2.

Tabelle 1

| Pulvereigenschaften, chemische Zusammensetzung der Pulvermischung, Parameter der Aufbereitung: | | |
|---|---|---|
| **Pulvereigenschaften** | Typ A | Typ B |
| Anteil $\alpha$-$Si_3N_4$ [%] | 96,5 | 98 |
| O-Gehalt [%] | 1,8 | 1,5 |
| C-Gehalt [%] | 0,15 | 0,1 |
| Kation. Verunreinig. [%] | 0,05 | 0,025 |
| mittl. Korngröße [$\mu$m][1] | 0,3 | 0,45 |
| spez. Oberfläche [$m^2$/g] | 19,3 | 12 |
| **Pulvermischung:** | A | B |
| $Si_3N_4$ [Gew.%] | 87,5 | 87,7 |
| $Y_2O_3$ [Gew.%] | 8,2 | 8,2 |
| $Al_2O_3$ [Gew.%] | 4,1 | 4,1 |
| $HfO_2$ [Gew.%] | 0,2 | --- |
| **Aufbereitung:** | | |
| Feststoffgehalt [%] | 65 | 65 |
| pH-Wert | 10 | 9,5 |
| effektive Mahldauer [min] | 75 | 75 |
| Mahlkugelabrieb [% bezogen auf Feststoff] | 0,2 | 0,2 |
| spez. Oberfläche des Mahlgutes [$m^2$/g] | 19,5 | 14 |
| O-Zunahme [%] | 0,65 | 0,5 |
| mittlere Korngröße des Mahlgutes [$\mu$m] | 0,3 | 0,38 |
| Kornanteil > 1$\mu$m [%] | 1,0 | 2,5 |

[1] Meßmethode: Laserbeugungsspektrometrie

Tabelle 2

| Formteileigenschaften: | | | | |
|---|---|---|---|---|
| Beispiel Nr. | 1 | 2 | 3 | 4 |
| Dichte [% d. th. Dichte] | 99,2 | 99,0 | 98,8 | 99,0 |
| Biegebruchfestigkeit[1] [MPa] bei Raumtemperatur | 1308 | 1312 | 1180 | 943 |
| Weibullmodul | 20 | 22 | 25 | 26 |
| Bruchzähigkeit[2] $K_{IC}$ [MPa $\cdot \sqrt{m}$] | 9 | 8,8 | 8,5 | 7,5 |
| Gefügeparameter: | | | | |
| Streckungsgrad[3] | 6,5 | 7,5 | 7,0 | 5 |
| mittlere Kornbreite [$\mu$m] | 0,22 | 0,25 | 0,32 | 0,6 |
| Kornanzahl [$10^6$/mm$^2$] | 5,3 | 4,5 | 3,5 | 0,95 |

[1] Prüfung nach DIN 51110

[2] Prüfung nach DIN 51109

[3] Verhältnis der Kristallitlänge zur Kristallitbreite, ermittelt an einem mittels Rasterelektronenmikroskop mit 5000-facher Vergrößerung dargestellten Mikrogefüge durch Vermessenvon mindestens 40 Kristalliten mit parallelen Kristallitkanten

## Patentansprüche

1. Verfahren zur Herstellung einer homogenen und feinkristallinen Siliziumnitridkeramik, bei dem keramisches Pulver gemahlen, mit Formgebungshilfsmitteln gemischt, die Mischung zu Formteilen geformt und die Formteile anschließend unter Stickstoffatmosphäre gesintert werden, dadurch gekennzeichnet, daß das Sintern in einem Mehrstufenprozess bei Temperaturen $T_{max}$ im Bereich von 1700 bis 1900 °C unter Anwendung von Gasdrucken im Bereich von 0,2 bis 50 MPa erfolgt, wobei in einer ersten Temperaturstufe eine Temperatur von $0,9$ bis $0,96 \cdot T_{max}$ über eine Zeitdauer von 10 bis 50 min bei einem $N_2$-Druck von 0,2 bis 1,2 MPa gehalten wird und wobei in einer zweiten Temperaturstufe eine Temperatur von $0,97$ bis $0,985 \cdot T_{max}$ über eine Zeitdauer von 20 bis 80 min bei einem $N_2$-Druck von 3 bis 6 MPa gehalten wird, und daß danach die Temperaturerhöhung auf $T_{max}$ und die Druckerhöhung auf 7 bis 50 MPa erfolgt.

2. Verfahren nach Anspruch 1, dadurch gekennzeichnet, daß ab einer Temperatur von 1000 °C bis zu der ersten Temperaturstufe ein $N_2$-Druck von 0,3 bis 0,6 MPa vorliegt, daß in der ersten Temperaturstufe eine Temperatur von $0,945 \cdot T_{max}$ über eine Zeitdauer von 12 bis 25 min bei einem $N_2$-Druck von 0,3 bis 0,6 MPa gehalten wird, daß in der zweiten Temperaturstufe eine Temperatur von $0,975 \cdot T_{max}$ über eine Zeitdauer von 30 bis 50 min bei einem $N_2$-Druck von 4 bis 5 MPa gehalten wird, und daß danach die Temperaturerhöhung auf $T_{max}$ und die Druckerhöhung auf 7 bis 10 MPa erfolgt.

3. Verfahren nach Anspruch 1 oder 2, dadurch gekennzeichnet, daß die Druckhaltezeit auf der Endstufe 30 bis 100 min beträgt, vorzugsweise 60 bis 90 min, daß die Aufheizgeschwindigkeit im Bereich von 5 bis 35 K/min liegt und daß die Druckerhöhung mit einer Geschwindigkeit von 0,25 bis 1,2 MPa/min erfolgt, vorzugsweise von 0,5 bis 1,1 MPa/min.

4. Verfahren nach einem der Ansprüche 1 bis 3, dadurch gekennzeichnet, daß eine Mischung aus hochreinem $Si_3N_4$-Ausgangspulver mit guter Sinterreaktivität und mit Sinteradditiven in Form von $Al_2O_3$ und mindestens eines weiteren Oxides der Gruppe IV b des Periodensystems in wäßriger Suspension in einem pH-Bereich von 8 bis 10,5 so dispergiert, gemischt und gemahlen, beziehungsweise deagglomeriert wird, daß die Sauerstoffaufnahme während der Aufbereitung kleiner als 0,75 %, vorzugsweise $\leq 0,5$ %, bleibt und daß der Kornanteil $\geq 1 \mu$m des gemahlenen Produktes < 8 %, vorzugsweise $\leq 3$ %, beträgt, wobei als Dispergiermittel Polymerisate aus $\alpha,\beta$-ethylenisch ungesättigten Carbonsäuren, bevorzugt deren Salzen, oder wasserlösliche Copolymere mit Estern der ethylenisch ungesättigten Carbonsäuren verwendet werden.

**5.** Verfahren nach einem der Ansprüche 1 bis 4, dadurch gekennzeichnet, daß das Formen mittels Schlickergießen, Druckschlickergießen, Druckfiltrieren, Foliengießen, Extrudieren, Spritzgießen oder Trockenpressen erfolgt.

**6.** Verfahren nach Anspruch 5, dadurch gekennzeichnet, daß als Formgebungshilfsmittel für das Trockenpressen ein wasserdispergierbares Polyesterurethan in Kombination mit einem Polyoxazolin und/oder einer Fettsäure-Polyethylenglycoldispersion in einer Menge von 0,5 bis 10 Gew.-% eingesetzt wird, bezogen auf das Gesamtgewicht an zu formendem Pulver, und daß die Verdichtung von rotationssymmetrischen Bauteilen mit Hilfe des isostatischen Preßverfahrens durchgeführt wird.

**7.** Formteil hergestellt nach einem der Ansprüche 1 bis 6, mit einer feinkörnigen Mikrostruktur mit einer mittleren Kornbreite $\leq 0,6$ $\mu$m, wobei es eine Kornanzahl pro Flächeneinheit von $\geq 0,95 \cdot 10^6$, Körner/mm$^2$ aufweist und eine enge Kristallitgrößenverteilung, bei der die Kornbreite von 95 % der Kristallite im Bereich von 0,05 $\mu$m bis 0,5 $\mu$m liegt, und eine mechanische Biegebruchfestigkeit bei Raumtemperatur von $\geq 1180$ MPa besitzt.

**8.** Formteil nach Anspruch 7, dadurch gekennzeichnet, daß es ein Gefüge besitzt, bei dem die aus den oxidischen Sinteradditiven und SiO$_2$ an der Randzone der Si$_3$N$_4$-Partikel gebildete amorphe Korngrenzenphase eine lokale Ausdehnung in den Tripelpunkten von durchschnittlich 0,2 $\mu$m besitzt.

**9.** Formte nach Anspruch 7 oder 8, dadurch gekennzeichnet, daß es eine Bruchzähigkeit K$_{IC}$ im Bereich 7,5 bis 11 MPa $\cdot \sqrt{m}$, eine Wärmeleitfähigkeit von 20 W/m $\cdot$ K, einen linearen thermischen Ausdehnungskoeffizienten von 2,4 $\cdot 10^{-6}$/K (gemessen im Bereich von 20 bis 1000 °C), einen E-Modul von $\geq 300$ GPa und eine mechanische Biegebruchfestigkeit bei Raumtemperatur von $\geq 1200$ MPa und bei einer Prüftemperatur von 1000 °C im Bereich von 850 bis 1000 MPa besitzt.

**10.** Formteil nach einem der Ansprüche 7 bis 9, dadurch gekennzeichnet, daß es eine feinkörnige Mikrostruktur mit einer mittleren Kornbreite $\leq 0,32$ $\mu$m, einer Kornanzahl pro Flächeneinheit von $\geq 3,5 \cdot 10^6$ Körner/mm$^2$ und eine enge Kristallitgrößenverteilung besitzt, wobei die maximale Kornbreite $\leq 1,5$ $\mu$m ist.

**11.** Verwendung eines Formteils nach einem der Ansprüche 7 bis 10 im Maschinen-, Anlagen- und Motorenbau, zum Beispiel als Ein- oder Auslaßventil in Verbrennungsmotoren.

**Claims**

**1.** A process for producing a homogeneous and finely crystalline silicon nitride ceramic in which ceramic powder is milled, mixed with shaping aids, the mixture is shaped into parts and the shaped parts are subsequently sintered in a nitrogen atmosphere, which comprises carrying out sintering in a multi-stage process at temperatures T$_{max}$ in the range from 1700 to 1900°C using gas pressures in the range from 0.2 to 50 MPa, where in a first temperature stage a temperature from 0.9 to 0.96 $\cdot$ T$_{max}$ is maintained over a time period from 10 to 50 minutes at an N$_2$ pressure from 0.2 to 1.2 MPa and where in a second temperature stage a temperature from 0.97 to 0.985 $\cdot$ T$_{max}$ is maintained over a time period from 20 to 80 minutes at an N$_2$ pressure from 3 to 6 MPa, and then increasing the temperature to T$_{max}$ and increasing the pressure to from 7 to 50 MPa.

**2.** The process as claimed in claim 1, wherein from a temperature of 1000°C up to the first temperature stage there is an N$_2$ pressure from 0.3 to 0.6 MPa, in the first temperature stage a temperature of 0.945 $\cdot$ T$_{max}$ is maintained over a time period from 12 to 25 minutes at an N$_2$ pressure from 0.3 to 0.6 MPa, in the second temperature stage a temperature of 0.975 $\cdot$ T$_{max}$ is maintained over a time period from 30 to 50 minutes at an N$_2$ pressure from 4 to 5 MPa, and then the temperature is increased to T$_{max}$ and the pressure is increased to from 7 to 10 MPa.

**3.** The process as claimed in claim 1 of 2, wherein the pressure holding time in the final stage is from 30 to 100 minutes, preferably from 60 to 90 minutes, the heating rate lies in the range from 5 to 35 K/min and the pressure is increased at a rate from 0.25 to 1.2 MPa/min, preferably from 0.5 to 1.1 MPa/min.

**4.** The process as claimed in any one of claims 1 to 3, wherein a mixture of high-purity Si$_3$N$_4$ starting powder having good sinter reactivity and containing sintering additives in the form of Al$_2$O$_3$ and at least one further oxide of group IV b of the Periodic Table is dispersed, mixed and milled or deagglomerated in agueous suspension in a pH range from 8 to 10.5 in such a way that the oxygen absorption during processing remains less than 0.75%, preferably $\leq$ 0.5%, and that the proportion of grains $\geq 1$ $\mu$m in the milled product is < 8%, preferably $\leq$ 3%, with polymers of $\alpha,\beta$-ethylenically unsaturated carboxylic acids, preferably salts thereof, or water-soluble copolymers with esters of the ethylenically unsaturated carboxylic acids being used as dispersant.

5. The process as claimed in any one of claims 1 to 4, wherein shaping is carried out by means of slip casting, pressure slip casting, pressure filtration, sheet casting, extruding, injection-molding or dry pressing.

6. The process as claimed in claim 5, wherein a water-dispersible polyester urethane in combination with a polyoxazoline and/or a fatty acid/polyethylene glycol dispersion is used in an amount from 0.5 to 10% by weight, based on the total weight of powder to be shaped, as a shaping aid in dry pressing, and the compaction of components having rotational symmetry is carried out with the aid of isostatic pressing.

7. A shaped part produced as claimed in any one of claims 1 to 6, having a fine-grained microstructure having an average grain width $\leq 0.6\ \mu m$, which has a number of grains per unit area of $\geq 0.95 \cdot 10^6$ grains/mm$^2$ and a narrow crystallite size distribution in which the grain width of 95% of the crystallites lies in the range from 0.05 $\mu m$ to 0.5 $\mu m$, and possesses a mechanical flexural fracture strength at room temperature of $\geq 1180$ MPa.

8. A shaped part as claimed in claim 7, which possesses a microstructure in which the amorphous grain boundary phase formed from the oxidic sintering additives and $SiO_2$ at the edge zone of the $Si_3N_4$ particles possesses a thickness at the triple points of 0.2 $\mu m$ on average.

9. A shaped part as claimed in claim 7 or 8, which possesses a fracture toughness $K_{IC}$ in the range from 7.5 to 11 MPa $\cdot \sqrt{m}$, a thermal conductivity of 20 W/m $\cdot$ K, a linear coefficient of thermal expansion of $2.4 \cdot 10^{-6}$/K (measured in the range from 20 to 1000°C), an elastic modulus of $\geq 300$ GPa and a mechanical flexural fracture strength at room temperature of $\geq 1200$ MPa and at a test temperature of 1000°C in the range from 850 to 1000 MPa.

10. A shaped part as claimed in any one of claims 7 to 9, which possesses a fine-grained microstructure having an average grain width $\leq 0.32\ \mu m$, a number of grains per unit area of $\geq 3.5 \cdot 10^6$ grains/mm$^2$ and a narrow crystallite size distribution, where the maximum grain width is $\leq 1.5\ \mu m$.

11. Use of a shaped part as claimed in any one of claims 7 to 10 in the construction of machines, plants and engines, for example as inlet or exhaust valve in combustion engines.

**Revendications**

1. Procédé de fabrication d'une céramique de nitrure de silicium homogène et finement cristalline, dans lequel une poudre céramique est broyée, mélangée à des auxiliaires de moulage, le mélange est façonné pour donner des objets moulés, et les objets moulés sont ensuite frittés sous atmosphère d'azote, caractérisé en ce que le frittage est réalisé dans un procédé à plusieurs paliers, a des températures $T_{max}$ comprises dans l'intervalle de 1700 à 1900°C par utilisation de pressions de gaz comprise dans l'intervalle de 0,2 à 50 MPa, où on maintient dans un premier palier de température une température de 0,9 à 0,96.$T_{max}$ pendant 10 à 50 min sous une pression d'azote de 0,2 à 1,2 MPa, et où on maintient dans un deuxième palier de température une température de 0,97 à 0,985.$T_{max}$ pendant 20 à 80 min sous une pression d'azote de 3 à 6 MPa, puis que l'on procède à l'élévation de température à $T_{max}$ et à l'élévation de pression à une valeur de 7 à 50 MPa.

2. Procédé selon la revendication 1, caractérisé en ce que, à partir d'une température de 1000°C et jusqu'à un premier palier de température, on a une pression d'azote de 0,3 à 0,6 MPa, que l'on maintient dans le premier palier de température une température de 0,945.$T_{max}$ pendant 12 à 25 min sous une pression d'azote de 0,3 à 0,6 MPa, que l'on maintient dans le deuxième palier de température une température de 0,975.$T_{max}$ pendant 30 à 50 min sous une pression d'azote de 4 à 5 MPa, puis que l'on procède à l'élévation de température à $T_{max}$ et à l'élévation de la pression à une valeur de 7 à 10 MPa.

3. Procédé selon la revendication 1 ou 2, caractérisé en ce que le temps de maintien en pression, lors du palier final, est de 30 à 100 min, de préférence de 60 à 90 min, que la vitesse de montée en température est comprise entre 5 et 35 K/min, et que l'élévation de la pression s'effectue à une vitesse de 0,25 à 1,2 MPa/min et de préférence de 0,5 à 1,1 MPa/min.

4. Procédé selon l'une des revendications 1 à 3, caractérisé en ce qu'on disperse, mélange et broie, ou encore désagglomère, un mélange constitué d'une poudre de départ de $Si_3N_4$ de haute pureté présentant une bonne réactivité de frittage, et d'additifs de frittage sous forme d'$Al_2O_3$ et d'au moins un oxyde du Groupe IVb du Tableau Périodique, en suspension aqueuse, sur un intervalle de pH de 8 à 10,5, de façon que l'absorption d'oxygène pendant la préparation reste inférieure à 0,75 % et de préférence $\leq 0,5$ %, et que la fraction granulométrique $\geq 1\ \mu m$ du produit broyé soit < 8 % et de préférence $\leq 3$ %, auquel cas on utilise comme dispersant des polymères d'acides carboxyliques à insaturation α,β-éthylénique, de préférence leurs sels, ou encore des copolymères solubles dans l'eau avec des esters des acides carboxyliques à insaturation éthylénique.

5. Procédé selon l'une des revendications 1 à 4, caractérisé en ce que le moulage s'effectue par coulée en barbotine, coulée en barbotine sous pression, filtration sous pression, coulée de feuilles, extrusion, moulage par injection ou compression à sec.

6. Procédé selon la revendication 5, caractérisé en ce qu'on utilise comme auxiliaire de moulage pour la compression à sec un polyester-uréthanne dispersible dans l'eau, en combinaison avec une polyoxazoline et/ou une dispersion d'un acide gras et d'un polyéthylèneglycol en une quantité de 0,5 à 10 % en poids par rapport au poids total de la poudre à mouler, et que la densification de pièces à symétrie de rotation est réalisée par le procédé de compression isostatique.

7. Objet moulé fabriqué selon l'une des revendications 1 à 6, ayant une microstructure finement granulaire avec une largeur granulométrique moyenne $\leq 0,6$ $\mu$m, le nombre de grains par unité d'aire étant $\geq 0,95.10^6$ grains/mm$^2$, avec une étroite répartition granulométrique, où la granulométrie de 95 % des cristallites est comprise dans l'intervalle de 0,05 $\mu$m à 0,5 $\mu$m, et qui présente une résistance mécanique à la rupture par flexion à la température ambiante $\geq 1180$ MPa.

8. Objet moulé selon la revendication 7, caractérisé en ce qu'il a une structure dans laquelle la phase intergranulaire amorphe, formée à partir des additifs de frittage de type oxyde et du $SiO_2$ sur la zone marginale des particules de $Si_3N_4$ présente une extension locale, dans les points triples, en moyenne de 0,2 $\mu$m.

9. Objet moulé selon la revendication 7 ou 8, caractérisé en ce qu'il a une ténacité à la rupture $K_{IC}$ comprise entre 7,5 et 11 MPa.m$^{1/2}$, une conductibilité thermique de 20 W/m.K, un coefficient linéaire de dilatation thermique de $2,4.10^{-6}$/K (mesuré entre 20 et 1000°C), un module d'élasticité $\geq 300$ GPa et une résistance mécanique à la rupture par flexion à la température ambiante $\geq 1200$ MPa, et, à une température d'essai de 1000°C, comprise entre 850 et 1000 MPa.

10. Objet moulé selon l'une des revendications 7 à 9, caractérisé en ce qu'il présente une microstructure finement granulaire ayant une granulométrie moyenne $\leq 0,32$ $\mu$m, un nombre de grains par unité d'aire $\geq 3,5.10^6$ grains/mm$^2$, et une étroite répartition de la granulométrie des cristallites, la granulométrie maximale étant $\leq 1,5$ $\mu$m.

11. Utilisation d'un objet moulé selon l'une des revendications 7 à 10 dans la construction mécanique, la construction des installations et la construction des moteurs, par exemple comme soupape d'admission ou d'échappement dans les moteurs à combustion interne.